# EUROPÄISCHE PATENTSCHRIFT

(11) **EP 1 394 420 B1**
(45) Veröffentlichungstag und Bekanntmachung des Hinweises auf die Patenterteilung: **26.10.2005**
(21) Anmeldenummer: 03015141.9
(22) Anmeldetag: 04.07.2003
(51) Int. Cl.: F16B 11/00, B62D 25/24

(54) **Einsatzteil für eine Wandöffnung, insbesondere an einer Fahrzeugkarosserie**
Insert for a wall opening, particularly in a vehicle body
Pièce à insérer dans une paroi, en particulier dans une carrosserie de véhicule

(30) Priorität: 10.07.2002 DE 10231274
(43) Veröffentlichungstag der Anmeldung: 03.03.2004
(73) Patentinhaber: Newfrey LLC, Newark, Delaware 19711 (US)
(72) Erfinder: Schäty, Harald, 35578 Wetzlar (DE)
(74) Vertreter: Haar, Lucas Heinz Jörn

(56) Entgegenhaltungen:
- EP-A- 0 621 169
- DE-A- 3 100 498
- US-A- 5 852 854

## Beschreibung

Die Erfindung betrifft ein Einsatzteil zum Einsetzen in eine Öffnung in einer Wand, insbesondere an einer Fahrzeugkarosserie, mit einem Hals zum Durchgreifen der Öffnung, einem an dem Hals angeordneten Flansch, der den die Öffnung umgebenden Randbereich der Wand überdeckt, wenn das Einsatzteil in der Öffnung angeordnet ist und der auf der dem Hals zugekehrten Unterseite eine Vertiefung aufweist, die von einem erhabenen Umfangsrand nach außen begrenzt ist, einem Körper aus Kunststoff, der in der Vertiefung an der Unterseite des Flansches angeordnet ist und der in einen fließfähigen Zustand gebracht werden kann, und mit einem Haltemittel zum Festhalten des Einsatzteils in der Öffnung der Wand.

Einsatzteile der angegebenen Art können sowohl als Stöpsel zum dichten Verschließen einer Wandöffnung an einer Fahrzeugkarosserie als auch als Dübel ausgebildet sein, der zur Aufnahme eines Befestigungselementes, z.B. einer Schraube, bestimmt ist.

Ein als Stöpsel ausgebildetes Einsatzteil der angegebenen Art ist aus DE 31 00 498 A1 bekannt. Dieser Stöpsel weist einen in die Öffnung eingreifenden Hals auf, der mehrere Unterbrechungen hat. In den Unterbrechungen sind federnde Eingreifelemente angeordnet, von denen jedes eine schräge Schulter besitzt. Wird der Stöpsel in die Wandöffnung eingesetzt, so stützen sich die Schultern auf der dem Flansch abgekehrten Seite an dem Öffnungsrand ab. Hierdurch wird der Flansch in Richtung Wand gedrückt und der aus der Vertiefung in dem Flansch hervorstehende Körper aus Dichtungsmaterial unter Druck gesetzt. Wird der eingesetzte Stöpsel auf eine geeignete Arbeitstemperatur unterhalb des Schmelzpunktes des Stöpselmaterials erhitzt, so schmilzt der Körper, wobei durch den ausgeübten Druck der Rand des Flansches gegen die Oberfläche der Wand gezogen wird und das geschmolzene Dichtungsmaterial durch die Blechöffnung fließt und den Raum zwischen der Kante der Öffnung und den Halsteilen des Stöpsels ausfüllt. Hierbei ist von Nachteil, daß sich die Position des Stöpsels beim Schmelzen des Klebstoffes ändert, wodurch unerwünschte Lageabweichungen auftreten können. Weiterhin kann geschmolzenes Dichtungsmaterial an dem Umfangsrand des Flansches austreten, solange der Umfangsrand sich in einem Abstand von der Wand befindet. Die Anwendung des bekannten Stöpsels ist daher im wesentlichen auf horizontal ausgerichtete Wände beschränkt.

Aus DE 44 23 576 C2 ist ein Verschluß mit einem Körper aus geformtem Klebstoff bekannt, der in eine in einem Blech angeordneten Öffnung eingesetzt wird. Der Körper hat einen umfänglichen Rand, der auf der Oberseite des Bleches auf dem die Öffnung umgebenden Blechrand aufliegt. Durch mehrere elastische Rastnasen wird der Körper an dem Blech gehalten. Auf der Oberseite des umfänglichen Randes des Körpers ist eine Schnur aus Klebstoff abgelegt. Der durch Erwärmen geschmolzene Klebstoff gelangt durch Löcher in dem umfänglichen Rand in eine Nut, auf der an dem Blech anliegenden Unterseite des Randes, so daß sich die Nut mit Klebstoff füllen kann, um eine feste Verbindung durch Kleben zwischen dem Körper und dem Blech zu bilden. Auch dieser Verschluß eignet sich nur für Öffnungen in im wesentlichen horizontal ausgerichteten Wänden.

Der Erfindung liegt die Aufgabe zugrunde, ein Einsatzteil der eingangs angegebenen Art zu schaffen, welches die Einhaltung enger Lagetoleranzen ermöglicht und auch zur Anbringung an geneigten Wänden geeignet ist.

Erfindungsgemäß wird die Aufgabe dadurch gelöst, daß der Kunststoffkörper eine solche Größe hat, daß er vollständig von der Vertiefung an der Unterseite des Flansches aufgenommen wird und daß das Einsatzteil so gestaltet ist, daß in der Einbaulage, in der das Einsatzteil durch die Haltemittel in der Öffnung der Wand festgehalten wird, der Umfangsrand des Flansches an die Wand angedrückt wird

Das erfindungsgemäße Einsatzteil hat den Vorteil, daß es beim Einsetzen in die Öffnung in eine genau definierte Lage gebracht werden kann, in der es durch die Haltemittel und den an die Wand angedrückten Umfangsrand des Flansches bis zur endgültigen Fixierung durch den geschmolzenen Kunststoff festgehalten wird. Es können daher hohe Anforderungen an die Lagegenauigkeit des Einsatzteiles erfüllt werden.

Ein weiterer wesentlicher Vorteil besteht darin, daß die Anordnung des erfindungsgemäßen Einsatzteils von der Neigung der Wand, in der sich die Öffnung befindet, weitgehend unabhängig ist. Der an die Wand angedrückte Umfangsrand des Flansches verhindert selbst bei vertikaler Ausrichtung der Wand, daß der geschmolzene Kunststoff vor der erneuten Verfestigung auf der Flanschseite aus der Vertiefung auslaufen kann. Auf diese Weise wird ein sauberes Aussehen der Verklebung auf der Flanschseite des Einsatzteiles gewährleistet und verhindert, daß die den Flansch umgebende Fläche durch ausgelaufenen Kunststoff verändert wird.

Überraschenderweise hat sich außerdem gezeigt, daß sowohl bei horizontaler als auch bei vertikaler Ausrichtung der Wand der geschmolzene Kunststoff zuverlässig in den Ringspalt zwischen dem Rand der Öffnung und dem Hals des Einsatzteiles eindringt und diesen vollständig abdichtet. Das erfindungsgemäße Einsatzteil eignet sich daher zum dichten Verschließen einer Wandöffnung, wobei die Ränder der Öffnung von dem Kunststoff abgedeckt werden und dadurch gegen Korrosionen geschützt sind. Wird zur Abdichtung ein Kunststoff oder Klebstoff mit guter Netzwirkung verwendet, so wird auch bei einer Überkopf-Anordnung des Einsatzteiles eine zuverlässige Abdichtung und Verklebung erreicht.

Nach einem weiteren Vorschlag der Erfindung kann vorgesehen sein, daß der Flansch des Einsatzteiles quer zu seiner Erstreckung elastisch verformbar ist und daß die Haltemittel zum Festhalten des Einsatzteiles in der Öffnung der Wand so ausgebildet sind, daß die Einbaulage des Einsatzteiles nur durch elastische Verformung des mit seinem Umfangsrand an der Wand abgestützten Flansches erreichbar ist. Auf diese Weise bildet der Flansch ein federndes Element, welches bei der Montage des Einsatzteils gespannt wird und die gewünschte Kraft zum Andrücken des Umfangrandes erzeugt. Hierdurch wird mit einfachen Mitteln ein ausreichender Federweg zum Ausgleich von fertigungsbedingten Maßabweichungen erreicht. Zusätzlich kann sich der Flansch an Formabweichungen der Wand anpassen. Anstelle eines elastisch verformbaren Flansches können erfindungsgemäß auch die Haltemittel federnde Elemente aufweisen, die in der Einbaulage eine den Umfangsrand des Flansches andrückende Kraft erzeugen.

Als Haltemittel weist das Einsatzteil vorzugsweise wenigstens zwei federnde Rastnasen auf, die jeweils eine Einführschräge und eine Abstützfläche haben, wobei die Einführschrägen zum Zusammendrücken der Rastnasen beim Einsetzen in eine Wandöffnung dienen und die Abstützflächen geeignet sind, nach dem Entspannen der Rastnasen sich auf der dem Flansch abgekehrten Seite an der Wand abzustützen. Die Rastnasen können erfindungsgemäß in einen elastisch verformbaren Wandabschnitt des Halses ohne Unterbrechung integriert sein. Dies hat den Vorteil, daß der Hals als angeschlossener Ring ausgebildet sein kann, wodurch die gleichmäßige Verteilung des Klebstoffes in der von dem Hals und dem Rand der Öffnung gebildeten Klebefuge begünstigt wird.

Nach einem weiteren Vorschlag der Erfindung weist das Einsatzteil einen den Hals auf der dem Flansch abgekehrten Seite verlängernden Schaft auf, der eine Hals und Flansch durchdringende Bohrung zur Aufnahme eines Befestigungselementes enthält. Das freie Ende des Schaftes kann geschlossen sein, um einen dichten Verschluß der Öffnung zu ermöglichen.

Erfindungsgemäß kann die Querschnittskontur des Halses kreisrund oder elliptisch sein oder die Form eines Vielecks, insbesondere eines Quadrats, haben. Im Zusammenwirken mit einer entsprechend geformten Öffnung ist das Einsatzteil in der Öffnung gegen Verdrehen gesichert und kann daher beispielsweise beim Eindrehen einer Befestigungsschraube ein dem Eindrehmoment entgegenwirkendes Gegendrehmoment auf die Wand übertragen. Um zwischen Einsatzteil und Wand ein möglichst hohes Gegendrehmoment übertragen zu können, ist nach einem weiteren Vorschlag der Erfindung vorgesehen, daß der Hals eine quadratische Querschnittskontur hat und lediglich auf zwei entgegengesetzten Seiten nach außen vorspringende Rastnasen aufweist, wobei die die Rastnasen tragenden Wände durch sich in Längsrichtung erstreckende Aussparungen in einen äußeren, federnden Wandabschnitt und einen inneren, federnden Wandabschnitt unterteilt sind. Durch diese Gestaltung wird bei ausreichender Elastizität im Bereich der Rastnasen ein torsionssteifer Hals geschaffen, der geeignet ist, vergleichsweise große Drehmomente auf die Wand zu übertragen.

Es ist weiterhin vorteilhaft, wenn das Einsatzteil auf der Außenseite des Halses in einem parallelen Abstand von dem Flansch rippenartige Vorsprünge aufweist, die beim Einsetzen des Einsatzteiles durch die Öffnung der Wand hindurchsteckbar sind. Vorzugsweise haben die Vorsprünge von dem Flansch abgekehrte Einführschrägen und dem Flansch zugekehrte Begrenzungsflächen, wobei die Begrenzungsflächen in der Ebene der Abstützflächen der Rastnasen liegen. Durch die Vorsprünge wird der zwischen dem Hals des Einsatzteiles und dem Rand der Öffnung, in die das Einsatzteil eingesetzt ist, vorhandene Ringspalt so weit abgedichtet, daß das geschmolzene Material des Kunststoffkörpers in dem Ringspalt zurückgehalten wird und eine zuverlässige Abdichtung und Verklebung des Einsatzteiles in der Öffnung der Wand gewährleistet ist.

Die Erfindung wird nachfolgend anhand eines Ausführungsbeispiels näher erläutert, das in der Zeichnung dargestellt ist. Es zeigen
- Figur 1: einen Schnitt I-I eines als Dübel ausgebildeten Einsatzteiles nach der Erfindung,
- Figur 2: einen Schnitt II-II des Einsatzteiles gemäß Figur 1,
- Figur 3: eine Ansicht des flanschseitigen Endes des Einsatzteiles gemäß Figur 1,
- Figur 4: das in die Öffnung einer Wand eingesetzte Einsatzteil gemäß Figur 1 vor dem Schmelzen des Klebstoffes,
- Figur 5: das in die Öffnung einer Wand eingesetzte Einsatzteil nach dem Verkleben,
- Figur 6: eine Ansicht einer anderen Ausgestaltung eines als Dübel ausgebildeten Einsatzteiles nach der Erfindung und
- Figur 7: einen Querschnitt des Einsatzteils gemäß Figur 6 entlang der Linie VII - VII.

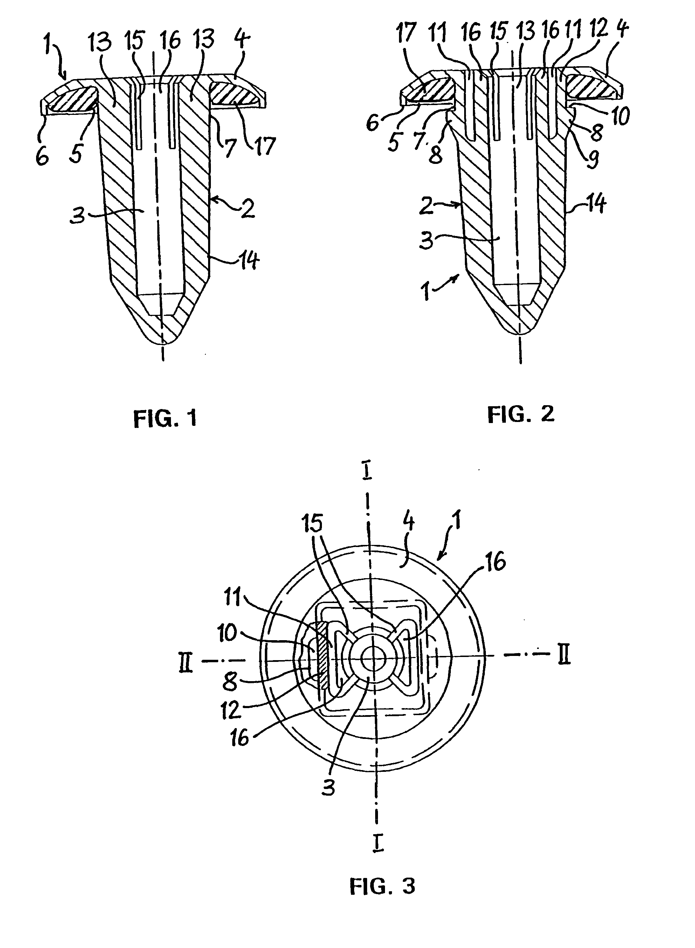

Bei dem in den Figuren 1 bis 3 dargestellten Einsatzteil 1 handelt es sich um einen Dübel aus Kunststoff, der zum Einsetzen in eine quadratische Öffnung in einer Wand aus Blech, z.B. an einer Fahrzeugkarosserie bestimmt ist, um mittels einer in den Dübel eingedrehten Schraube ein Anbauteil an der Wand befestigen zu können. Der Dübel soll außerdem die Öffnung, in die er eingesetzt ist, dicht verschließen.

Das Einsatzteil 1 besteht aus einer langgestreckten Hülse 2 mit einer zentralen Bohrung 3, die an einem Ende verschlossen ist. An das offene Ende der Hülse 2 ist ein kreisrunder, koaxial zur Bohrung 3 angeordneter Flansch 4 angeformt, der an allen Seiten von der Hülse 2 absteht. Der Flansch 4 weist auf seiner der Hülse 2 zugekehrten Unterseite eine ringförmige Vertiefung 5 auf. Radial nach innen wird die Vertiefung 5 von der Außenfläche der Hülse 2 und radial nach außen von einem Umfangsrand 6 des Flansches 4 begrenzt.

Die Außenfläche der Hülse 2 hat im wesentlichen die Form einer Stufenpyramide mit quadratischer Grundfläche, wobei die Pyramidenspitze das geschlossene Hülsenende bildet. Der sich an den Flansch 4 anschließende Pyramidenfuß bildet einen Hals 7, der in der Einbaulage des Einsatzteiles 1 in die Wandöffnung eingreift. Durch seine vierkantige Form ist der Hals 7 in einer entsprechend gestalteten Öffnung gegen Verdrehen gesichert und in der Lage, ein dem Eindrehmoment einer in die Bohrung 3 eingedrehten Schraube entgegenwirkendes Gegendrehmoment auf die Wand zu übertragen.

Auf zwei entgegengesetzten Seiten weist der Hals 7 nach außen vorspringende Rastnasen 8 auf, die dem geschlossenen Hülsenende zugekehrte Einführschrägen 9 und dem Flansch 4 gegenüberliegende Abstützflächen 10 haben. Im Bereich der Rastnasen 8 ist die Hülsenwand durch sich parallel zur Bohrung 3 erstreckende Aussparungen 11 geschwächt. Hierdurch wird die elastische Verformbarkeit der die Rastnasen 8 tragenden Wandabschnitte 12 so weit erhöht, daß die Rastnasen 8 beim Einsetzen des Einsatzteiles 1 in eine Öffnung durch den Kontakt ihrer Einführschrägen 9 mit dem Öffnungsrand nach innen gedrückt werden können, um so die im Vergleich zum Abstand der Rastnasen 8 engere Wandöffnung zu passieren. Die Abstützflächen 10 der Rastnasen 8 sind zur Anlage an der dem Flansch 4 entgegengesetzten Seite der das Einsatzteil 1 aufnehmenden Wand bestimmt. Ihr Abstand von der Berührungsebene des Umfangsrandes 6 ist etwas kleiner als die Dicke der Wand, für die das Einsatzteil bestimmt ist. Wird das Einsatzteil 1 in die Öffnung der Wand eingesetzt, so muß daher durch axialen Druck auf die Hülse 2 der mit seinem Umfangsrand 6 an der Wand anliegende Flansch 4 elastisch verformt werden, damit die Rastnasen 8 auf der anderen Seite aus der Wandöffnung heraustreten und sich dort mit ihren Abstützflächen 10 an die Wand anlegen können.

Die Wandabschnitte 13 des Halses 7, die keine Rastnasen 8 tragen, sind steif ausgebildet. Sie ermöglichen dadurch die Aufnahme hoher Haltekräfte und die Übertragung eines hohen Drehmoments auf die das Einsatzteil 1 aufnehmende Wand.

Der sich an den Hals 7 anschließende Abschnitt der Hülse 2 bildet einen Schaft 14, dessen Pyramidenspitze das Einführen des Einsatzteiles 2 in eine Öffnung erleichtert.

Die Aussparungen 11 sind an ihren seitlichen Enden durch radiale Schlitze 15 mit der Bohrung 3 verbunden. Hierdurch sind radial federnde Zungen 16 gebildet, die durch Eindrehen einer Schraube in die Bohrung radial nach außen gedrückt werden und sich an die Wandabschnitte 12 anlegen. Das Schraubengewinde schneidet nur in die Wandabschnitte 13 und die Wand des Schafts 14 ein. Die Zungen 16 füllen den Zwischenraum zwischen der Schraube und den Wandabschnitten 12 aus und stützen dadurch die Wandabschnitte 12 radial nach innen ab. Hierdurch werden die Rastnasen 8 in ihrer Halteposition verriegelt, so daß das in einer Wandöffnung montierte Einsatzteil 1 zusätzlich gegen Lösen gesichert ist.

Zum Abdichten einer das Einsatzteil 1 aufnehmenden Öffnung in einer Wand und zum Verbinden des Einsatzteiles 1 mit dieser Wand durch Kleben ist in der Vertiefung 5 des Flansches 4 ein Ring 17 aus Klebstoff angeordnet. Der Ring 17 kann als separates Element vorgeformt und anschließend in die Vertiefung 5 eingesetzt sein. Der Klebstoff kann aber auch in flüssiger oder teigiger Form in die Vertiefung so eingebracht sein, daß ein dort haftender, geschlossener Ring entsteht. Als Klebstoff wird vorzugsweise ein aus mehreren Komponenten zusammengesetzter Kunststoff verwendet, der bei Erwärmen auf eine Reaktionstemperatur schmilzt, dadurch in die abzudichtenden und zu verklebenden Fugen eindringt und sich dann verfestigt und abbindet. Mit Hilfe eines solchen Klebstoffes kann das Einsatzteil 1 vorteilhaft bei der Herstellung von Fahrzeugkarosserien eingesetzt werden. Das Einsatzteil 1 kann hierbei nach dem Lackieren montiert werden. Durchläuft die Karosserie anschließend eine Brennkammer, so wird der Klebstoff aktiviert und das Teil abgedichtet und verklebt.

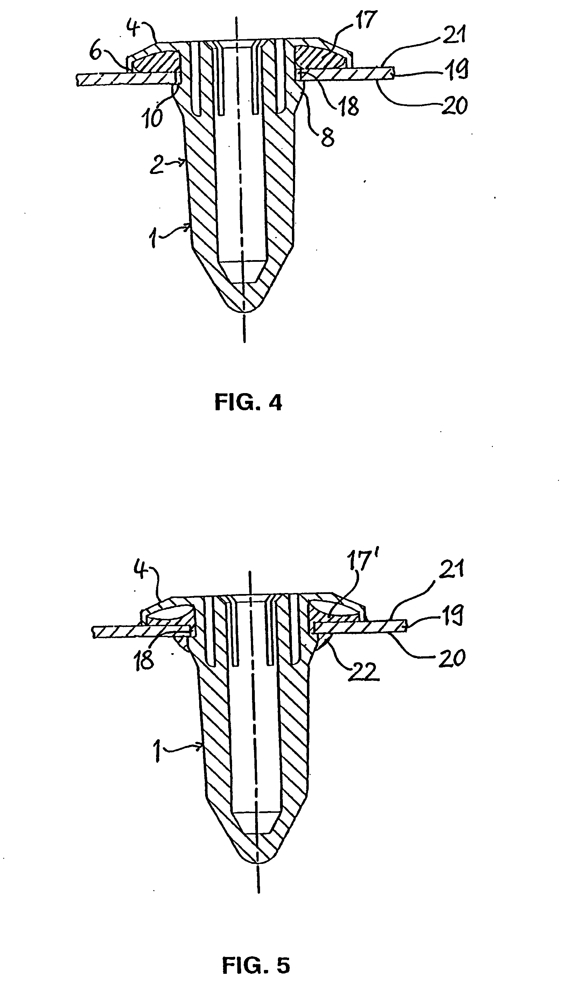

In den Figuren 4 und 5 sind der Einbau und die Verklebung des Einsatzteiles 1 veranschaulicht. Das Einsatzteil 1 befindet sich hierbei in der Einbaulage in einer quadratischen Öffnung 18 in einer Wand 19. In dieser Lage wird es durch die Rastnasen 8 festgehalten, die mit ihren Abstützflächen 10 an der in Einsteckrichtung gesehen hinteren Wandfläche 20 anliegen. Der Flansch 4 wurde bei der Montage des Einsatzteiles 1 durch Druck auf die Hülse 2 entgegen der Einsteckrichtung elastisch verformt und stützt sich daher mit seinem Umfangsrand 6 mit einer der Verformungskraft entsprechenden Kraft an der vorderen Wandfläche 21 ab. Hierdurch dichtet der Umfangrand 6 die Vertiefung 5 gegenüber der Wandfläche 21 ausreichend ab, so daß dort beim Schmelzen des Ringes 17 keine nennenswerte Klebstoffmenge austreten kann.

Figur 5 zeigt die Verteilung des geschmolzenen Klebstoffes 17' am Ende des durch Erwärmung ausgelösten Fließ- und Aushärtungsprozesses. Der Klebstoff 17' ist hierbei vollständig in den Spalt zwischen der Wand 19 und dem Einsatzteil 1 eingedrungen und hat zusätzlich an deren hinteren Wandfläche 20 einen das Einsatzteil 1 umgebenden Wulst 22 gebildet. Auch an der vorderen Wandfläche 21 kann, bedingt durch kleinste Spalte erzeugende Unebenheiten in den Kontaktflächen, Klebstoff 17' in die Kontaktzone eindringen und gegebenenfalls die äußere Kante des Umfangsrandes 6 benetzen. Das Auslaufen einer den optischen Eindruck störenden Klebstoffmenge an der vorderen Wandfläche 21 wird jedoch wirksam vermieden, auch wenn die Wand 19 eine senkrechte Lage hat. Nach Abbinden des Klebstoffes 17' bildet das Einsatzteil 1 einen flüssigkeits- und gasdichten Verschluß der Öffnung 18 und eine Befestigungsstelle zum Befestigen eines Bauteils mit vergleichsweise hohen Haltekräften. Die Ränder der Öffnung 18 werden durch den Klebstoff 17' vollständig bedeckt, wodurch ein guter Schutz gegen Korrosion gegeben ist.

Das beschriebene Einsatzteil kann auch ohne Verwendung eines Rings 17 aus Klebstoff und Verkleben nach der Montage vorteilhaft eingesetzt werden, wenn eine Abdichtung der Wandöffnung nicht erforderlich ist, da durch die Rastnasen 8 bereits eine für viele Anwendungsfälle ausreichend große Haltekraft erzeugt wird und diese Lösung Kostenvorteile bietet.

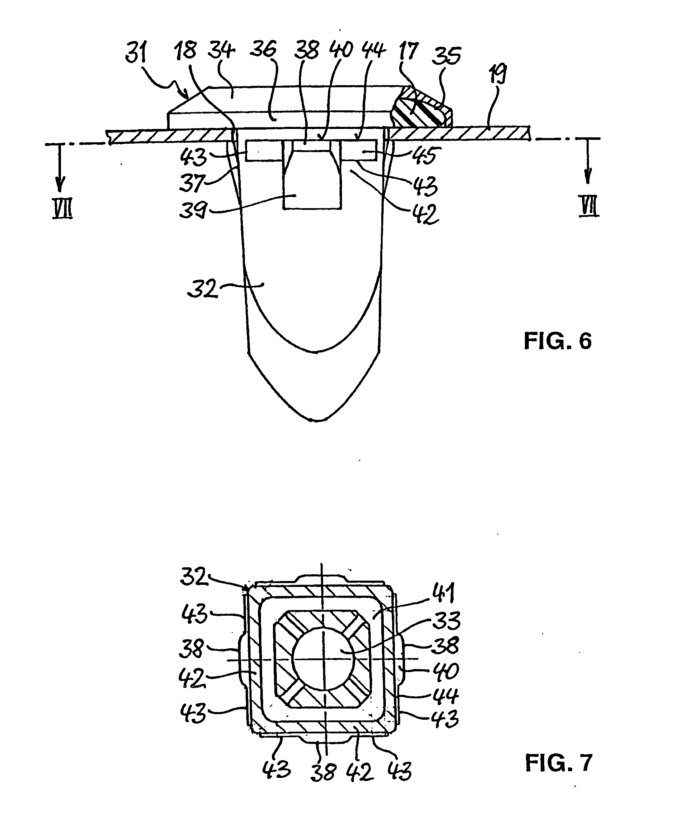

In den Figuren 6 und 7 ist ein Einsatzteil 31 gezeigt, welches gegenüber dem Einsatzteil 1 wie nachfolgend im einzelnen beschrieben abgewandelt ist. Bei dem Einsatzteil 31 handelt es sich ebenfalls um einen Dübel aus Kunststoff, der in eine quadratische Öffnung 18 in einer Wand 19, z.B. aus Blech, einsetzbar ist und zur Aufnahme eines Befestigungselementes, beispielsweise einer Schraube, dient. Das Einsatzteil 31 hat eine langgestreckte Hülse 32, eine zentrale Bohrung 33 und einen Flansch 34 mit einem kreisförmigen Umfangsrand 36 und einer ringförmigen Vertiefung 35 zur Aufnahme eines Ringes 17 aus Klebstoff. An den Flansch 34 angrenzend weist die Hülse 32 einen Hals 37 von quadratischer Querschnittsform auf, der an seinen vier Außenseiten jeweils eine nach außen vorspringende Rastnase 38 trägt. Die Rastnasen 38 haben dem geschlossenen Hülsenende zugekehrte Einführschrägen 39 und dem Flansch 34 gegenüberliegende Abstützflächen 40. Im Inneren des Halses 37 befindet sich eine die Bohrung 33 umgebende, ringförmige Aussparung 41. Hierdurch wird die elastische Verformbarkeit der die Rastnasen 38 tragenden Wandabschnitte 42 erhöht, so daß die Rastnasen 38 unter Verformung der Wandabschnitte 42 beim Einsetzen des Einsatzteiles in die Öffnung 18 der Wand 19 zusammengedrückt werden können.

Beiderseits der Rastnasen 38 befinden sich an diese unmittelbar angrenzend rippenartige Vorsprünge 43, die sich in einer zu dem Flansch 34 parallelen Richtung jeweils bis zu den Ecken der Hülse 32 erstrecken. Die Vorsprünge 43 haben dem Flansch 34 zugekehrte Begrenzungsflächen 44, die in der Ebene der Abstützflächen 40 der Rastnasen 38 liegen, und auf ihrer dem geschlossenen Hülsenende zugekehrten Seite Einführschrägen 45. Die Höhe der Vorsprünge 43, senkrecht zur Außenfläche der Hülse 32 gemessen, ist wesentlich kleiner als die in gleicher Weise gemessene Höhe der Rastnasen 38 und beträgt etwa nur ein Drittel bis ein Fünftel der Höhe der Rastnasen 38.

Bei der Montage des Einsatzteils 31 werden die Vorsprünge 43 ebenso wie die Rastnasen 38 durch die Öffnung 18 in der Wand 19 hindurchgedrückt, so daß sie sich in der Einbaulage des Einsatzteiles 31 auf der dem Flansch 34 abgekehrten Seite der Wand 19 befinden. Die Vorsprünge 43 haben die Aufgabe, den Ringspalt zwischen dem Hals 37 des Einsatzteiles 1 und dem Rand der Öffnung 18 in der Wand 19 zusätzlich abzudichten, so daß beim Schmelzen des aus Klebstoff bestehenden Ringes 17 auch bei ungünstigen Einbaulagen eine ausreichende Klebstoffmenge in dem Ringspalt zurückgehalten wird und dadurch eine zuverlässige Abdichtung zwischen dem Einsatzteil 31 und der Wand 19 erreicht wird. Die Höhe der Vorsprünge 43 wird dabei so bemessen, daß bei den fertigungsbedingten Maßabweichungen im Falle größter Außenabmessung des Einsatzteils und kleinster Innenabmessung der Öffnung das Einsatzteil noch mit ausreichend kleiner Kraft in die Einbaulage in der Öffnung gedrückt werden kann und im Falle kleinster Außenabmessung des Einsatzteils und größter Innenabmessung der Öffnung eine zum Zurückhalten des geschmolzenen Klebstoffes noch ausreichende Abdichtung zwischen dem Einsatzteil und der Wand erreicht wird. Die Anbringung und Ausbildung der Vorsprünge 43 hat den Vorteil, daß im Vergleich zur Ausführungsform gemäß den Figuren 1 bis 5 größere fertigungsbedingte Maßabweichungen ohne Nachteil für die Montage und die dichte Verklebung des Einsatzteils zugelassen werden können.

Wenngleich die beschriebene Ausgestaltung der Vorsprünge 43 sehr vorteilhaft ist, so ist die Erfindung keineswegs hierauf beschränkt. Anstelle der gezeigten keilförmigen Gestalt, können die Vorsprünge 43 auch als erhabene Wülste, Rippen oder dergleichen ausgebildet sein oder die Form von Dichtlippen haben.

## Patentansprüche

1. Einsatzteil (1) zum Einsetzen in eine Öffnung (18) in einer Wand (19), insbesondere an einer Fahrzeugkarosserie, mit einem Hals (7) zum Durchgreifen der Öffnung (18), einem an dem Hals (7) angeordneten Flansch (4), der den die Öffnung (18) umgebenden Randbereich der Wand (19) überdeckt, wenn das Einsatzteil (1) in der Öffnung (18) angeordnet ist, und der auf der dem Hals (7) zugekehrten Unterseite eine Vertiefung (5) aufweist, die von einem erhabenen Umfangsrand (6) nach außen begrenzt ist, einem Körper (17) aus Kunststoff, der in der Vertiefung (5) an der Unterseite des Flansches (4) angeordnet ist, und der in einen fließfähigen Zustand gebracht werden kann, und mit einem Haltemittel (8) zum Festhalten des Einsatzteils (1) in der Öffnung (18) der Wand (19), **dadurch gekennzeichnet, daß** der Kunststoffkörper (17) eine solche Größe hat, daß er vollständig von der Vertiefung (5) an der Unterseite des Flansches (4) aufgenommen wird und daß das Einsatzteil (1) so gestaltet ist, daß in der Einbaulage, in der das Einsatzteil (1) durch die Haltemittel in der Öffnung (18) der Wand (19) festgehalten wird, der Umfangsrand (6) des Flansches (4) an die Wand (19) angedrückt wird.

2. Einsatzteil nach Anspruch 1, **dadurch gekennzeichnet, daß** der Flansch (4) quer zu seiner durch den Umfangsrand (6) gebildeten Anlagefläche elastisch verformbar ist.

3. Einsatzteil nach einem der Ansprüche 1 oder 2, **dadurch gekennzeichnet, daß** die Haltemittel zum Festhalten des Einsatzteiles (1) in der Öffnung (18) der Wand (19) so angeordnet sind, daß in der Einbaulage des Einsatzteiles (1) der mit seinem Umfangsrand (6) an der Wand (19) abgestützte Flansch (4) elastisch verformt ist.

4. Einsatzteil nach einem der vorhergehenden Ansprüche, **dadurch gekennzeichnet, daß** die Haltemittel federnde Elemente aufweisen, die in der Einbaulage eine den Umfangsrand des Flansches andrückende Kraft erzeugen.

5. Einsatzteil nach einem der vorhergehenden Ansprüche, **gekennzeichnet durch** wenigstens zwei federnde Rastnasen (8), die jeweils eine Einführschräge (9) und eine Abstützfläche (10) haben, wobei die Einführschrägen (9) zum Zusammendrücken der Rastnasen (8) beim Einsetzen in eine Wandöffnung dienen und die Abstützflächen (10) geeignet sind, nach dem Zurückverformen der Rastnasen (8) sich auf der dem Flansch (4) abgekehrten Seite an der Wand abzustützen.

6. Einsatzteil nach einem der vorhergehenden Ansprüche, **dadurch gekennzeichnet, daß** die Rastnasen (8) in einen elastisch verformbaren Wandabschnitt (12) des Halses (7) integriert sind.

7. Einsatzteil nach einem der vorhergehenden Ansprüche, **dadurch gekennzeichnet, daß** auf der Außenseite des Halses (37) in einem parallelen Abstand von dem Flansch (34) rippenartige Vorsprünge (43) vorgesehen sind, die beim Einsetzen des Einsatzteils (31) durch die Öffnung (18) in der Wand (19) hindurchsteckbar sind.

8. Einsatzteil nach Anspruch 7, **dadurch gekennzeichnet, daß** die Vorsprünge (43) von dem Flansch (34) abgekehrte Einführschrägen (45) und dem Flansch (34) zugekehrte Begrenzungsflächen (44) haben, wobei die Begrenzungsflächen (44) in der Ebene der Abstützflächen (40) der Rastnasen (38) liegen.

9. Einsatzteil nach einem der vorhergehenden Ansprüche, **gekennzeichnet durch** einen den Hals (7) auf der dem Flansch (4) abgekehrten Seite verlängernden Schaft (14), der eine den Hals (7) und den Flansch (4) durchdringende Bohrung (3) zur Aufnahme eines Befestigungselementes enthält.

10. Einsatzteil nach Anspruch 9, **dadurch gekennzeichnet, daß** das freie Ende des Schaftes (14) geschlossen ist.

11. Einsatzteil nach einem der vorhergehenden Ansprüche, **dadurch gekennzeichnet, daß** die Querschnittskontur des Halses (7) die Form eines Vielecks, insbesondere eines Quadrats hat.

12. Einsatzteil nach einem der vorhergehenden Ansprüche, **dadurch gekennzeichnet, daß** der Hals (7) eine quadratische Querschnittskontur hat und auf zwei entgegengesetzten Seiten nach außen vorspringende Rastnasen (8) aufweist, wobei die Wände, welche die Rastnasen (8) tragen, durch sich in Längsrichtung erstreckende Aussparungen (11) in einen äußeren, federnden Wandabschnitt (12) und einen inneren Wandabschnitt unterteilt sind.

13. Einsatzteil nach Anspruch 12, **dadurch gekennzeichnet, daß** die inneren Wandabschnitte sich in Längsrichtung der Bohrung (3) erstreckende Federzungen (16) bilden, die durch radiale Schlitze (15), die in die Aussparungen (11) münden, seitlich freigestellt sind.

14. Einsatzteil nach einem der Ansprüche 12 oder 13, **dadurch gekennzeichnet, daß** die Wandabschnitte (13), die keine Rastnasen tragen, steif sind.

## Claims

1. Insert part (1) for insertion in an opening (18) in a wall (19), in particular on a vehicle body, having a neck (7) to pass through the opening (18), having a flange (4) arranged on the neck (7) and covering the marginal portion of the wall (19) around the opening (18) if the insert part (1) is arranged in the opening (18) and comprising a depression (5) on the under side facing the neck (7), bounded on the outside by an elevated circumferential edge (6), having a body (17) of plastic arranged in the depression (5) on the under side of the flange (4) and capable of being brought into a flowable state, and having a retaining means (8) to secure the insert part (1) in the opening (18) of the wall (17), **characterised in that** the plastic body (17) is of such size that it is accommodated completely by the depression (5) on the under side of the flange (4), and **in that** the insert part (1) is of such conformation that, in the installation position in which the insert part (1) is secured in the opening (18) of the wall (19) by the retaining means, the circumferential edge (6) of the flange (4) is pressed into contact with the wall (19).

2. Insert part according to claim 1, **characterised in that** the flange (4) is elastically deformable transverse to its surface of contact formed by the circumferential edge (6).

3. Insert part according to either of claims 1 and 2, **characterised in that** the retaining means for securing the insert part (1) in the opening (18) of the wall (19) are so arranged that, in the installation position of the insert part (1), the flange (4) bearing on the wall (19) with its circumferential edge (6) is elastically deformed.

4. Insert part according to any of the preceding claims, **characterised in that** the retaining means comprise spring elements which, in the installation position, generate a force pressing the circumferential edge of the flange into contact.

5. Insert part according to any of the preceding claims, **characterised by** at least two spring catches (8) each having an entry incline (9) and a bearing surface (10), said entry incline (9) serving to compress the catches (8) upon insertion in a wall opening, and the bearing surfaces (10) being suitable, after retro-deformation of the catches (8), for bearing on the wall on the side away from the flange (4).

6. Insert part according to any of the preceding claims, **characterised in that** the catches (8) are integrated into an elastically deformable wall segment (12) of the neck (7).

7. Insert part according to any of the preceding claims, **characterised in that**, on the outside of the neck (37) at a parallel distance from the flange (34), rib-like projections (43) are provided, which upon insertion of the insert part (31) can be thrust through the opening (18) in the wall (19).

8. Insert part according to claim 7, **characterised in that** the projections (43) have lead-in inclines (45) facing away from the flange (34) and boundary surfaces (44) facing the flange (34), said boundary surfaces (44) lying in the plane of the abutment surfaces (40) of the catches (38).

9. Insert part according to any of the preceding claims, **characterised by** a shank (14) extending the neck (7) on the side away from the flange and containing a bore (3) through the neck (7) and the flange (4) to accommodate a fastening element.

10. Insert part according to claim 9, **characterised in that** the free end of the shank (14) is closed.

11. Insert part according to any of the preceding claims, **characterised in that** the cross-sectional contour of the neck (7) is in the shape of a polygon, in particular a square.

12. Insert part according to any of the preceding claims, **characterised in that** the neck (7) has a square cross-sectional contour and comprises catches (8) projecting outward on two opposed sides, the walls bearing the catches (8) being subdivided by recesses (11) extending in lengthwise direction into an outer, springing wall segment (12) and an inner wall segment.

13. Insert part according to claim 12, **characterised in that** the inner wall segments form spring tongues (16) extending in lengthwise direction of the bore (3) and freed laterally by radial slots (15) opening into the recesses (11).

14. Insert part according to either of claims 12 and 13, **characterised in that** the wall segments (13) not bearing any catches are rigid.

## Revendications

1. Pièce à insérer (1) que l'on insère dans une ouverture (18) d'une paroi (19), notamment dans la carrosserie d'un véhicule, et qui comprend un collet (7) qui pénètre dans l'ouverture (18) et la pince, un flanc (4) situé sur le collet (7) qui vient recouvrir la zone marginale entourant l'ouverture (18) de la paroi (19) lorsque la pièce à insérer (1) est placée dans l'ouverture (18), et qui présente un renfoncement (5), sur le dessous orienté vers le collet (7), délimité vers l'extérieur par un bord circonférentiel en relief (6), un élément en plastique (17) qui est disposé dans le renfoncement (5) sur le dessous du flanc (4) et qui peut être amené à l'état fluide, ainsi qu'un moyen de retenue (8) permettant de maintenir la pièce à insérer (1) dans l'ouverture (18) de la paroi (19), **caractérisée en ce que** l'élément en plastique (17) possède une dimension telle qu'il peut être entièrement retiré du renfoncement (5) sur le dessous du flanc (4), et **en ce que** la pièce à insérer (1) possède une forme telle que, dans la position de montage dans laquelle elle doit être fixée à travers le moyen de retenue (8) dans l'ouverture (18) de la paroi (19), le bord circonférentiel (6) du flanc (4) est pressé contre la paroi (19).

2. Pièce à insérer selon la revendication 1, **caractérisée en ce que** le flanc (4) est déformable élastiquement et transversalement par rapport à sa surface de montage définie par le bord circonférentiel (6).

3. Pièce à insérer selon la revendication 1 ou 2, **caractérisée en ce que** les moyens de retenue servant à maintenir la pièce à insérer (1) dans l'ouverture (18) de la paroi (19) sont disposés de telle sorte que, dans la position de montage de la pièce à insérer (1), le flanc (4) reposant contre la paroi (19) avec son bord circonférentiel (6) est déformé de manière élastique.

4. Pièce à insérer selon l'une des revendications précédentes, **caractérisée en ce que** les moyens de retenue comportent des éléments élastiques qui, dans la position de montage, exercent une force de poussée sur le bord circonférentiel du flanc.

5. Pièce à insérer selon l'une des revendications précédentes, **caractérisée par** au moins deux tenons encliquetables élastiques (8) qui possèdent chacun un chanfrein d'insertion (9) et une face d'appui (10), et dans laquelle les chanfreins d'insertion (9) servent à pousser ensemble les tenons encliquetables (8) lors de l'introduction dans une ouverture de la paroi, tandis que les faces d'appui (10) sont capables, une fois que les tenons encliquetables (8) ont repris leur forme, d'appuyer contre la paroi du côté orienté à l'opposé du flanc (4).

6. Pièce à insérer selon l'une des revendications précédentes, **caractérisée en ce que** les tenons encliquetables (8) sont intégrés dans un segment de paroi élastiquement déformable (12) du collet (7).

7. Pièce à insérer selon l'une des revendications précédentes, **caractérisée en ce que** des saillies de type nervures (43) sont formées sur le côté externe du collet (7) de manière parallèle au flanc (34), lesquelles, lors de l'insertion de la pièce à insérer (31) à travers l'ouverture (18) de la paroi (19), peuvent venir s'y enficher.

8. Pièce à insérer selon la revendication 7, **caractérisée en ce que** les saillies (43) comportent des chanfreins d'insertion (45) qui vont en s'éloignant du flanc (34) ainsi que des surfaces de limitation (44) orientées en direction du flanc (34), lesquelles surfaces de limitation (44) se situent dans le plan des faces d'appui (40) des tenons encliquetables (38).

9. Pièce à insérer selon l'une des revendications précédentes, **caractérisée par** une tige (14) représentant un prolongement du collet (7) du côté orienté à l'opposé du flanc (4), laquelle comprend un alésage (3) qui traverse le collet (7) et le flanc (4) afin de recevoir un élément de fixation.

10. Pièce à insérer selon la revendication 9, **caractérisée en ce que** l'extrémité libre de la tige (14) est fermée.

11. Pièce à insérer selon l'une des revendications précédentes, **caractérisée en ce que** le contour de la coupe transversale du collet (7) a la forme d'un polygone, et plus précisément d'un carré.

12. Pièce à insérer selon l'une des revendications précédentes, **caractérisée en ce que** le collet (7) possède un contour de coupe transversale carré et comporte des tenons encliquetables (8) dépassant vers l'extérieur sur deux côtés opposés, tandis que les parois, qui comportent les tenons encliquetables, se divisent en une section de paroi externe et élastique (12) et en une section de paroi interne par le biais d'évidements (11) s'étendant dans le sens de la longueur.

13. Pièce à insérer selon la revendication 12, **caractérisée en ce que** les sections de paroi interne forment des lames élastiques (16) qui s'étendent dans le sens de la longueur de l'alésage (3) et qui, par le biais d'encoches radiales (15) donnant dans les évidements (11), se trouvent ainsi libres latéralement.

14. Pièce à insérer selon la revendication 12 ou 13, **caractérisée en ce que** les sections de paroi (13) ne comportant pas de tenons encliquetables sont rigides.
